# EUROPEAN PATENT APPLICATION

(11) **EP 2 809 051 A1**
(43) Date of publication of application: **03.12.2014**
(21) Application number: 12874709.4
(22) Date of filing: 07.06.2012
(51) Int. Cl.: H04M 1/725, H04M 1/21

(54) **PROFILE SELF-ADAPTION ADJUSTMENT METHOD AND TERMINAL**

(30) Priority: 16.04.2012 CN 201210109872
(71) Applicant: ZTE Corporation, Shenzhen, Guangdong 518057 (CN)
(72) Inventor: LI, Kefei, Shenzhen Guangdong 518057 (CN); LIU, Wanrong, Shenzhen Guangdong 518057 (CN)
(74) Representative: Brevalex
(86) International application number: PCT/CN2012/076605
(87) International publication number: WO 2013/155769

(57) **Abstract**

Disclosed are a method and terminal for adaptive adjustment of a scenario mode. With the method, a terminal obtains current scenario mode data; and a current scenario mode of the terminal is adjusted to correspond to the current scenario mode data. With the disclosure, formatted scenario mode data of a time period are automatically generated by organizing multiple data sources, and a scenario mode corresponding to the formatted scenario mode data of a time period is set, such that a scenario mode of a terminal, such as a mobile phone, may be adjusted automatically without the need of frequent user involvement in scenario-mode adjustment and selection, greatly increasing user-friendliness; by scenario-mode extension, a user is freed from cumbersome adjustment, making scenario-mode adjustment more intelligent, thus improving user experience.

## Description

### TECHNICAL FIELD

The disclosure relates to the field of mobile communication technology, and in particular to a method and terminal for adaptive adjustment of a scenario mode of a mobile terminal, such as a mobile phone.

### BACKGROUND

As a most commonly used electronic equipment in daily life, a mobile terminal, such as a mobile phone, has become an indispensable tool. With a mobile phone, people may browse a webpage, watch a current event, and enjoy a game anytime, anywhere.

In using a mobile phone, a user will often set a scenario mode suitable for the user per se. For example, the user may personalize the mobile phone with an operation such as using a favorite song as a ringtone, turning on a vibrational mode, adjusting a maximum volume, and the like. The scenario mode may refer to a combination of a group of ringtones and ringing ways. A ringtone includes a type and a volume of the ringtone. A ringing way determines whether there is vibration for an incoming call. For example, there may be ringing only, vibration only, vibration and then ringing, ringing with an increasing volume, simultaneous ringing and vibration, no prompt at all, etc. A user often will set an occasion-specific scenario mode. For example, , a user may adjust the scenario mode to a mode of simultaneous ringing and vibration when being in a noisy outdoor environment with concern of missing a call; and may adjust the scenario mode to a silent mode during a meeting to avoid an intrusive incoming call. In order to meet requirements of different users, typical built-in scenario modes provided will normally be provided by various mobile phone manufacturers at present, and at the same time a more specific scenario mode may also be defined by a user per se.

However, as a scenario often changes, a user has to switch back and forth between different scenario modes, leading to more cumbersome user operations. For example, a user has to adjust the scenario mode from a standard mode to a silent mode during a meeting, and then has to manually adjust the scenario mode back to the standard mode after the meeting. Such a way of frequent manual adjustment thus fails to meet the requirement of the user.

### SUMMARY

It is desired that embodiments of the disclosure provide a method and terminal for adaptive adjustment of a scenario mode, capable of avoiding cumbersome repetitive operations due to a need of frequent user involvement in scenario-mode adjustment caused by frequent scenario-change, thereby improving user experience.

To this end, the disclosure provides a method for adaptive adjustment of a scenario mode, including steps of:
obtaining, by a terminal, current scenario mode data; and
adjusting a current scenario mode of the terminal to correspond to the current scenario mode data.

In an embodiment, the method may further include steps of: before the step of obtaining, by a terminal, current scenario mode data,
extracting, by the terminal, a data source from user input or a local calendar;
generating scenario mode data of a time period by organizing the extracted data source according to a predetermined format/protocol; and
setting a scenario mode corresponding to the generated scenario mode data of a time period and saving the set scenario mode in a pre-set mapping table.

In an embodiment, the step of generating scenario mode data of a time period by organizing the extracted data source according to a predetermined format/protocol may be:
analysing the extracted data source; and
generating the scenario mode data of a time period by organizing, based on a result of the analysis, the extracted data source according to a time-period field, a scenario-type field, or a scenario-mode-configuration-type field.

In an embodiment, the step of adjusting a current scenario mode of the terminal to correspond to the current scenario mode data may be:
searching the mapping table for a scenario mode corresponding to the current scenario mode data; and
adjusting the current scenario mode of the terminal to be the scenario mode corresponding to the current scenario mode data.

In an embodiment, the step of obtaining, by a terminal, current scenario mode data may be:
obtaining, by the terminal, a current time according to a pre-set period; and
reading the scenario mode data of a time period corresponding to the current time.

The disclosure further provides a terminal for adaptive adjustment of a scenario mode, including:
an obtaining module configured for obtaining current scenario mode data; and
an adjusting module configured for adjusting a current scenario mode of the terminal to correspond to the current scenario mode data.

In an embodiment, the terminal may further include:
an extracting module configured for extracting a data source from user input or a local calendar;
a generating module configured for generating scenario mode data of a time period by organizing the extracted data source according to a predetermined format/protocol; and
a setting module configured for setting a scenario mode corresponding to the generated scenario mode data of a time period and saving the set scenario mode in a pre-set mapping table.

In an embodiment, the generating module may be specifically configured for: analysing the extracted data source; and generating the scenario mode data of a time period by organizing, based on a result of the analysis, the extracted data source according to a time-period field, a scenario-type field, or a scenario-mode-configuration-type field.

In an embodiment, the adjusting module may be specifically configured for: searching the mapping table for a scenario mode corresponding to the current scenario mode data; and adjusting the current scenario mode of the terminal to be the scenario mode corresponding to the current scenario mode data.

In an embodiment, the obtaining module may be specifically configured for: obtaining a current time according to a pre-set period; and reading the scenario mode data of a time period corresponding to the current time.

With the method and terminal for adaptive adjustment of a scenario mode according to embodiments of the disclosure, a current scenario mode of a terminal is adjusted adaptively according to scenario mode data of a current time period without a need of frequent user involvement in scenario-mode adjustment and selection, greatly increasing user-friendliness; by scenario-mode extension, a user is freed from cumbersome adjustment, making scenario-mode adjustment of a terminal more intelligent, improving user experience.

### BRIEF DESCRIPTION OF THE DRAWINGS

Fig. 1 is a flowchart of a method for adaptive adjustment of a scenario mode according to a first embodiment of the disclosure;
Fig. 2 is a flowchart of a method for adaptive adjustment of a scenario mode according to a second embodiment of the disclosure;
Fig. 3 is a schematic diagram of a structure of a terminal for adaptive adjustment of a scenario mode according to a third embodiment of the disclosure; and
Fig. 4 is a schematic diagram of a structure of a terminal for adaptive adjustment of a scenario mode according to a fourth embodiment of the disclosure.

### DETAILED DESCRIPTION

According to embodiments of the disclosure, formatted scenario mode data of a time period are automatically generated by organizing multiple data sources, and a scenario mode corresponding to the formatted scenario mode data of a time period is set, such that a scenario mode of a terminal, such as a mobile phone, may be adjusted automatically without the need of frequent user involvement in scenario-mode adjustment and selection; by scenario-mode extension, a user is freed from cumbersome adjustment, making scenario-mode adjustment more intelligent.

In order to make a technical scheme of the disclosure more clear and distinct, further description in detail will be performed in combination with appending drawings.

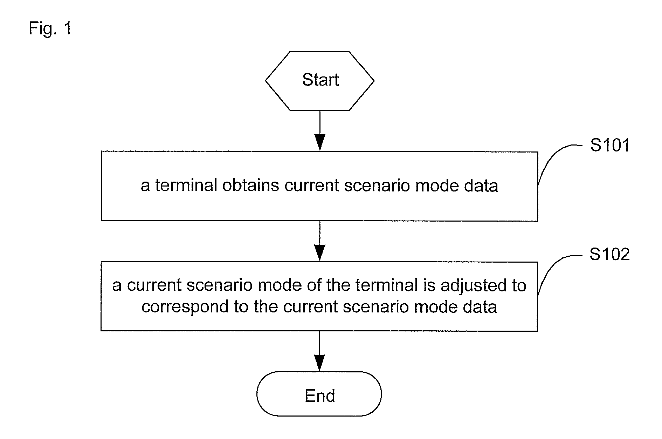

As shown in Fig. 1, according to a first embodiment of the disclosure, a method for adaptive adjustment of a scenario mode includes steps as follows.

In Step S101, a terminal obtains current scenario mode data.

Scenario mode data of a time period in a predetermined format are generated beforehand by the terminal according to a data source corresponding to the time period, and are saved locally. At the same time, a scenario mode corresponding to scenario mode data of each time period is set.

Such a data source may be obtained by user input upon prompt of the terminal, or may be extracted and sorted out by the terminal from memo information, such as a meeting, in a local calendar. Such a data source includes information on time periods separated by a time period or a time point.

According to a scenario change, scenario mode data corresponding to a time period or a time point are set by the terminal. In case of an irregular scenario change, information, such as meeting from 10:00 to 11:00 tomorrow and shopping from 3:30 PM to 5:00 PM the day after tomorrow, may be noted in the calendar of the terminal. In case of a regular scenario change, a regular daily time period may include, for example, working hours from 8:30 to 11:30, lunch break from 12:30 to 13:30, working hours from 14:00 to 5:30, sleeping hours from 23:00 to 7:00, the next day, and the like.

The terminal generates scenario mode data corresponding to a time period in the predetermined format according to such data of a time period.

In scenario-mode adjustment, the terminal may obtain the current time by periodic detection, and then locally read scenario mode data corresponding to the current time to obtain the scenario mode corresponding to the scenario mode data of a current time period.

For example, if a mobile phone detects that the current time is in a meeting time period from 10:00 to 11:00 corresponding to a scenario mode of a vibration mode, then the mobile phone will obtain the current time according to a pre-set time period, and when detecting that the current time is in the meeting time period from 10:00 to 11:00, the mobile phone reads the scenario mode data of this time period.

In Step S102, a current scenario mode of the terminal is adjusted to correspond to the current scenario mode data.

As each type of scenario mode data of a time period corresponds to a scenario mode, after the current scenario mode data are obtained, the scenario mode corresponding to the scenario mode data of a current time period is obtained from a local memory or a pre-set mapping table, and the current scenario mode of the terminal is adjusted to be the scenario mode corresponding to the current scenario mode data.

In the embodiment, scenario mode data of a time period are generated beforehand; a scenario mode corresponding to scenario mode data of each time period is configured; a terminal reads scenario mode data of the current time period, i.e. the current scenario mode data, according to the current time, and then obtains a scenario mode corresponding to the current scenario mode data, thereby achieving automatic scenario mode adjustment by the terminal without the need of frequent user involvement, greatly increasing user-friendliness; by scenario-mode extension, a user is freed from cumbersome adjustment, making scenario-mode adjustment of a terminal more intelligent, thereby avoiding cumbersome repetitive operations due to a need of frequent user involvement in scenario-mode adjustment caused by frequent scenario-change.

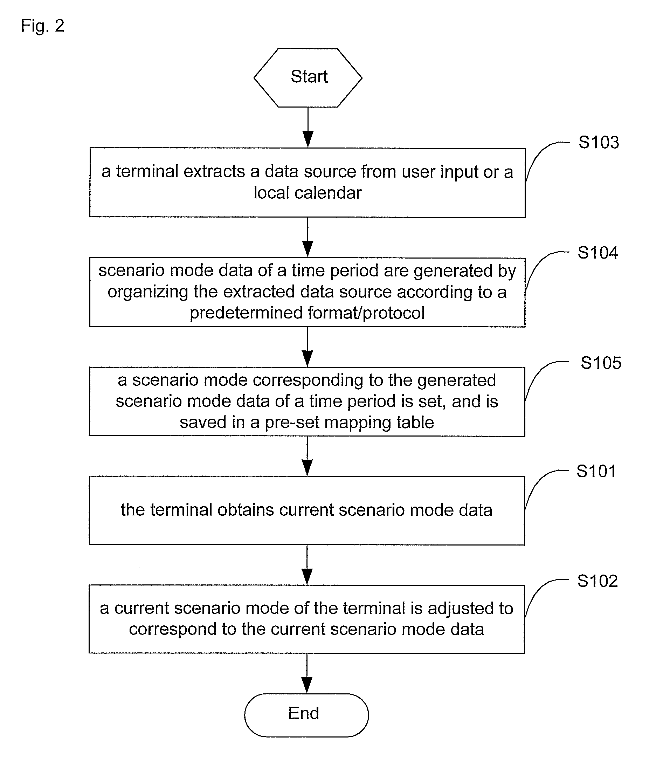

As shown in Fig. 2, according to a second embodiment based on the previous embodiment, before the Step S101, the method for adaptive adjustment of a scenario mode may further include steps as follows.

In Step S103, the terminal extracts a data source from user input or a local calendar.

The second embodiment differs from the first embodiment in that the terminal has to temporarily generate scenario mode data of a time period, and to set the scenario mode corresponding to each type of scenario mode data of a time period.

First, the terminal has to generate scenario mode data of a time period according to a data source corresponding to the time period. The data source may be input by a user through a certain interface operation. For example, the user may input working hours, a lunch break, and the like. Alternatively, or simultaneously, the terminal may automatically extract and collect the data source from memo information, such as a meeting, in a local calendar. At the same time, the user may also set a prevailing case in a conflict relating to a same time period.

Such a data source may be classified according to change in a scenario. There may be two types of change in a scenario. Information such as irregular but known change of a scenario may be noted by the user in the calendar. In case of a regular scenario change, a regular daily time period may include, for example, working hours from 8:30 to 11:30, lunch break from 12:30 to 13:30, working hours from 14:00 to 5:30, sleeping hours from 23:00 to 7:00, the next day, and the like.

The terminal may in some way guide the user to input data of both regular and irregular scenario changes, and at the same time may automatically extract and sort out memo information, such as a meeting, in the calendar to obtain the data source.

In Step S104, scenario mode data of a time period are generated by organizing the extracted data source according to a predetermined format/protocol.

This embodiment provides that if such data sources of time periods can be organized to generate formatted scenario mode data of a time period, and the terminal is allowed to perform automatic scenario-mode switch by reading such data, then the existing need of frequent user involvement in scenario-mode adjustment can be avoided.

Therefore, after data-source extraction is performed, the terminal organizes various data sources to generate formatted scenario mode data of a time period according to the predetermined format or protocol.

First, the terminal analyzes the extracted data source, organizes the extracted data source according to a field such as a time-period field, a scenario-type field, or a scenario-mode-configuration-type field, for example, and then generates scenario mode data of a time period.

In Step S105, a scenario mode corresponding to the generated scenario mode data of a time period is set, and is saved in a pre-set mapping table; and then steps S101~S102 are executed.

A scenario mode corresponding to each type of scenario mode data is set, and the set scenario mode and the correspondence are saved in the pre-set mapping table. If the current time falls in a certain time period, the terminal may search the mapping table for a scenario mode corresponding to scenario mode data of the time period, and then automatically adjust the current scenario mode of the terminal to be the scenario mode corresponding to the current scenario mode data, without the need of frequent user involvement in the scenario-mode adjustment, thus reducing burden on the user and improving user experience.

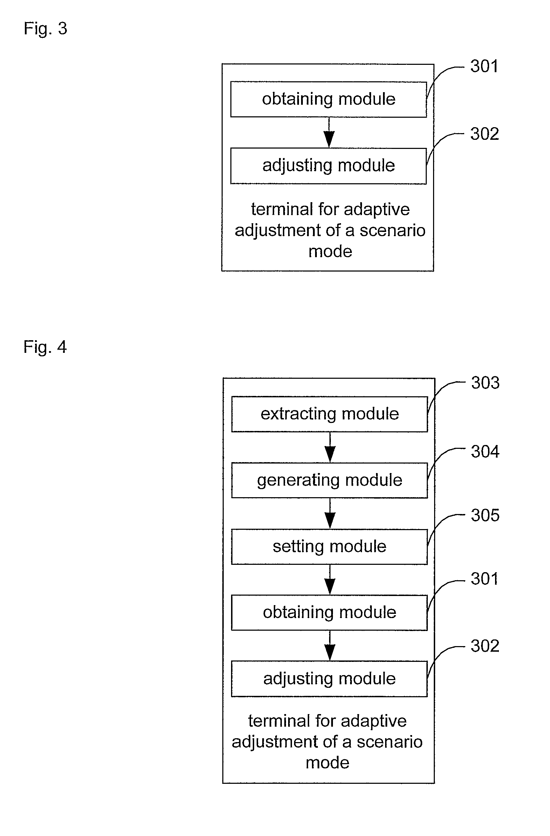

As shown in Fig. 3, according to a third embodiment of the disclosure, a terminal for adaptive adjustment of a scenario mode includes an obtaining module 301 and an adjusting module 302.

The obtaining module 301 is configured for obtaining the current scenario mode data.

The adjusting module 302 is configured for adjusting a current scenario mode of the terminal to correspond to the current scenario mode data.

Scenario mode data of a time period in a predetermined format are generated beforehand by the terminal according to a data source corresponding to the time period, and are saved locally. At the same time, a scenario mode corresponding to scenario mode data of each time period is set.

Such a data source may be obtained by user input upon prompt of the terminal, or may be extracted and sorted out by the terminal from memo information, such as a meeting, in a local calendar. Such a data source includes information on time periods separated by a time period or a time point.

According to a scenario change, scenario mode data corresponding to a time period or a time point are set by the terminal. In case of an irregular scenario change, information, such as meeting from 10:00 to 11:00 tomorrow and shopping from 3:30 PM to 5:00 PM the day after tomorrow, may be noted in the calendar of the terminal. In case of a regular scenario change, a regular daily time period may include, for example, working hours from 8:30 to 11:30, lunch break from 12:30 to 13:30, working hours from 14:00 to 5:30, sleeping hours from 23:00 to 7:00, the next day, and the like.

The terminal generates scenario mode data corresponding to a time period in the predetermined format according to such data of a time period.

In scenario-mode adjustment, the obtaining module 301 of the terminal may obtain the current time by periodic detection, and then locally read scenario mode data corresponding to the current time, such that the adjusting module 302 may obtain the scenario mode corresponding to the scenario mode data of a current time period, and adjust the scenario mode of the terminal.

For example, if a mobile phone detects that the current time is in a meeting time period from 10:00 to 11:00 corresponding to a scenario mode of a vibration mode, then the mobile phone will obtain the current time according to a pre-set time period, and when detecting that the current time is in the meeting time period from 10:00 to 11:00, the mobile phone reads the scenario mode data of this time period.

As each type of scenario mode data of a time period corresponds to a scenario mode, after the current scenario mode data are obtained, the scenario mode corresponding to the scenario mode data of a current time period is obtained from a local memory or a pre-set mapping table, and the current scenario mode of the terminal is adjusted to be the scenario mode corresponding to the current scenario mode data.

In the embodiment, scenario mode data of a time period are generated beforehand; a scenario mode corresponding to scenario mode data of each time period is configured; a terminal reads scenario mode data of the current time period, i.e. the current scenario mode data, according to the current time, and then obtains a scenario mode corresponding to the current scenario mode data, thereby achieving automatic scenario mode adjustment by the terminal without the need of frequent user involvement, greatly increasing user-friendliness; by scenario-mode extension, a user is freed from cumbersome adjustment, making scenario-mode adjustment of a terminal more intelligent, thereby avoiding cumbersome repetitive operations due to a need of frequent user involvement in scenario-mode adjustment caused by frequent scenario-change.

As shown in Fig. 4, according to a fourth embodiment based on the previous embodiment, the terminal for adaptive adjustment of a scenario mod may further include:
an extracting module 303 configured for extracting a data source from user input or local calendar;
a generating module 304 configured for generating scenario mode data of a time period by organizing the extracted data source according to a predetermined format/protocol; and
a setting module 305 configured for setting a scenario mode corresponding to the generated scenario mode data of a time period and saving the set scenario mode in a pre-set mapping table.

The fourth embodiment differs from the third embodiment in that the terminal extracts a data source of the user through the extracting module 303, generates scenario mode data of a time period through the generating module 304, and sets the scenario mode corresponding to each type of scenario mode data through the setting module 305.

First, the terminal has to generate scenario mode data of a time period according to a data source corresponding to the time period. The data source may be input by a user through a certain interface operation. For example, the user may input working hours, a lunch break, and the like. Alternatively, or simultaneously, the terminal may automatically extract and collect the data source from memo information, such as a meeting, in a local calendar. At the same time, the user may also set a prevailing case in a conflict relating to a same time period.

Such a data source may be classified according to change in a scenario. There may be two types of change in a scenario. Information such as irregular but known change of a scenario may be noted by the user in the calendar. In case of a regular scenario change, a regular daily time period may include, for example, working hours from 8:30 to 11:30, lunch break from 12:30 to 13:30, working hours from 14:00 to 5:30, sleeping hours from 23:00 to 7:00, the next day, and the like.

The terminal may in some way guide the user to input data of both regular and irregular scenario changes, and at the same time may automatically extract and sort out memo information, such as a meeting, in the calendar to obtain the data source.

Given that such data sources of time periods can be organized to generate formatted scenario mode data of a time period, and the terminal is allowed to perform automatic scenario-mode switch by reading such data, the existing need of frequent user involvement in scenario-mode adjustment can be avoided.

Therefore, after the extracting module 303 of the terminal performs data-source extraction, the generating module 304 organizes various data sources to generate formatted scenario mode data of a time period, according to the predetermined format or protocol.

Specifically, the generating module 304 analyzes the extracted data source, organizes the extracted data source according to a field such as a time-period field, a scenario-type field, or a scenario-mode-configuration-type field, for example, and then generates scenario mode data of a time period.

Then, the setting module 305 sets a scenario mode corresponding to each type of scenario mode data, and the set scenario mode and the correspondence are saved in the pre-set mapping table. If the current time falls in a certain time period, the adjusting module 302 of the terminal may search the mapping table for a scenario mode corresponding to scenario mode data of the time period read by the obtaining module 301, and then automatically adjust the current scenario mode of the terminal to be the scenario mode corresponding to the current scenario mode data, without the need of frequent user involvement in the scenario-mode adjustment, thus reducing burden on the user and improving user experience.

With the method and terminal for adaptive adjustment of a scenario mode according to embodiments of the disclosure, a current scenario mode of a terminal is adjusted adaptively according to scenario mode data of a current time period without a need of frequent user involvement in scenario-mode adjustment and selection, greatly increasing user-friendliness, thereby avoiding cumbersome repetitive operations due to a need of frequent user involvement in scenario-mode adjustment caused by frequent scenario-change; by scenario-mode extension, a user is freed from cumbersome adjustment, making scenario-mode adjustment of a terminal more intelligent, improving user experience.

What described are merely embodiments of the disclosure, and are not intended to limit the scope of the disclosure. All equivalent structures or flow variations made using content of the specification and accompanying drawings of the disclosure, or direct or indirect application in another related technical field, likewise fall within the scope of the disclosure.

## Claims

1. A method for adaptive adjustment of a scenario mode, comprising steps of:
obtaining, by a terminal, current scenario mode data; and
adjusting a current scenario mode of the terminal to correspond to the current scenario mode data.

2. The method according to claim 1, further comprising steps of: before the step of obtaining, by a terminal, current scenario mode data,
extracting, by the terminal, a data source from user input or a local calendar;
generating scenario mode data of a time period by organizing the extracted data source according to a predetermined format/protocol; and
setting a scenario mode corresponding to the generated scenario mode data of a time period and saving the set scenario mode in a pre-set mapping table.

3. The method according to claim 2, where the step of generating scenario mode data of a time period by organizing the extracted data source according to a predetermined format/protocol is:
analysing the extracted data source; and
generating the scenario mode data of a time period by organizing, based on a result of the analysis, the extracted data source according to a time-period field, a scenario-type field, or a scenario-mode-configuration-type field.

4. The method according to claim 2, wherein the step of adjusting a current scenario mode of the terminal to correspond to the current scenario mode data is:
searching the mapping table for a scenario mode corresponding to the current scenario mode data; and
adjusting the current scenario mode of the terminal to be the scenario mode corresponding to the current scenario mode data.

5. The method according to any one of claims 1-4, wherein the step of obtaining, by a terminal, current scenario mode data is:
obtaining, by the terminal, a current time according to a pre-set period; and
reading the scenario mode data of a time period corresponding to the current time.

6. A terminal for adaptive adjustment of a scenario mode, comprising:
an obtaining module configured for obtaining current scenario mode data; and
an adjusting module configured for adjusting a current scenario mode of the terminal to correspond to the current scenario mode data.

7. The terminal according to claim 6, further comprising:
an extracting module configured for extracting a data source from user input or a local calendar;
a generating module configured for generating scenario mode data of a time period by organizing the extracted data source according to a predetermined format/protocol; and
a setting module configured for setting a scenario mode corresponding to the generated scenario mode data of a time period and saving the set scenario mode in a pre-set mapping table.

8. The terminal according to claim 7, wherein
the generating module is configured for: analysing the extracted data source;
and generating the scenario mode data of a time period by organizing, based on a result of the analysis, the extracted data source according to a time-period field, a scenario-type field, or a scenario-mode-configuration-type field.

9. The terminal according to claim 7, wherein
the adjusting module is configured for: searching the mapping table for a scenario mode corresponding to the current scenario mode data; and adjusting the current scenario mode of the terminal to be the scenario mode corresponding to the current scenario mode data.

10. The terminal according to any one of claims 6-9, wherein
the obtaining module is configured for: obtaining a current time according to a pre-set period; and reading the scenario mode data of a time period corresponding to the current time.
